(19) Europäisches Patentamt
European Patent Office
Office européen des brevets

(11) **EP 4 318 404 A1**

(12) **EUROPEAN PATENT APPLICATION**

(43) Date of publication:
**07.02.2024 Bulletin 2024/06**

(21) Application number: **22188656.7**

(22) Date of filing: **04.08.2022**

(51) International Patent Classification (IPC):
**G06T 15/20** $^{(2011.01)}$     **G06T 15/50** $^{(2011.01)}$

(52) Cooperative Patent Classification (CPC):
**G06T 15/205; G06T 15/506**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Continental Automotive Technologies
GmbH
30165 Hannover (DE)**

(72) Inventors:
• **Dr. Hoy, Michael Colin
339780 Singapore (SG)**
• **Singh, Rahul
339780 Singapore (SG)**

(74) Representative: **Continental Corporation
c/o Continental Automotive Technologies GmbH
Intellectual Property
Guerickestr. 7
60488 Frankfurt am Main (DE)**

(54) **SYSTEM AND APPARATUS SUITABLE FOR USE WITH A HYPERNETWORK IN ASSOCIATION WITH NEURAL RADIANCE FIELDS (NERF) RELATED PROCESSING, AND A PROCESSING METHOD IN ASSOCIATION THERETO**

(57)     There is provided a processing method (300) which can be suitable for use with a hypernetwork in association with Neural Radiance Fields (NeRF) related processing. The processing method (300) can include an input step (302) wherein at least one input signal can be received and a processing step (304) wherein at least one processing task associated with NeRF-related processing can be performed. The processing task(s) can include at least one of rendering processing to generate at least one rendered signal associable with a current viewpoint, prerendering processing to generate at least one prerendered signal associable with a previous viewpoint with reference to the current viewpoint and comparison based processing of the prerendered signal(s) and the previous iteration(s) of the output signal(s) to derive at least one parameter usable for adapting in association with the hypernetwork.

Fig.1a

**Description**

**Field Of Invention**

The present disclosure generally relates to one or both of a system and at least one apparatus which can be suitable for use with a hypernetwork in association with Neural Radiance Fields (NeRF) related processing such as NeRF rendering. More specifically, the present disclosure relates to a system and/or at least one apparatus which can be suitable for use in association with, for example, improving temporal consistency in online dynamic neural radiance field rendering. The present disclosure further relates a processing method which can be associated with the system and/or the apparatus(es).

**Background**

Neural radiance fields (NeRF) can be useful for rendering viewpoints of a scene given a set of camera images taken of the scene. Examples of NeRF include online NeRF and dynamic NeRF. Specifically, for example, while NeRF ordinarily operates on offline data, variants are also applicable to online use, and/or use in dynamic scenes
In regard to online NeRF, a scene can be rendered without the neural network being trained on images from the exact same scene.
In regard to dynamic NeRF, scenes with moving objects can be modeled.
The present disclosure contemplates that there is a need to at least improve viewing experience of a user viewing the rendered viewpoints.

**Summary of the Invention**

In accordance with an aspect of the disclosure, there is provided an apparatus which can be coupled to at least one device (i.e., referable to as "neural network"), in accordance with an embodiment of the disclosure.
Specifically, there is provided an apparatus which can be suitable for use with, for example, at least one neural network (NN), in accordance with an embodiment of the disclosure.
More specifically, in one embodiment, the present disclosure contemplates an apparatus which can be suitable for use with a hypernetwork (e.g., in association with a plurality of NNs). In one example application, the apparatus can be suitable for use with a hypernetwork in association with Neural Radiance Fields (NeRF) related processing, in accordance with an embodiment of the disclosure.
The apparatus can, for example, include a first module and a second module, in accordance with an embodiment of the disclosure. The second module can be coupled to the first module.
The first module can, for example, be configured to receive at least one input signal, in accordance with an embodiment of the disclosure.
The second module can, for example, be configured to one or both of process (e.g., by manner of iterative processing and/or non-iterative processing) the received input signal(s) to generate at least one output signal, in accordance with an embodiment of the disclosure.
In one embodiment, processing by the second module can, for example, include any one of, or any combination of, or all of:

- Rendering processing
- Prerendering processing (e.g., or referable to as "retrospective rendering" in accordance with an embodiment of the disclosure)
- Comparison based processing

Specifically, in one embodiment, the second module can be configured to process the input signal(s) by manner of rendering processing, prerendering processing and/or comparison-based processing. For example, the second module can be configured to process the input signal(s) by manner of rendering processing, prerendering processing and comparison-based processing.
In one embodiment, the second module can be configured to perform at least one processing task of rendering processing to generate at least one rendered signal associable with a current viewpoint.
In one embodiment, the second module can be configured to perform at least one processing task of prerendering processing to generate at least one prerendered signal associable with a previous viewpoint with reference to the current viewpoint.
In one embodiment, the second module can be configured to perform at least one processing task of comparison-based processing of comparing the prerendered signal(s) and at least one previous iteration of the output signal so as to derive at least one parameter usable for adapting in association with the hypernetwork. This may help to facilitate consistency over time.

Moreover, in one embodiment, rendering processing can be associated with inclusion of at least one time-based parameter in positional encoding to facilitate rendering of data from multiple timestamps (e.g., data based on one or both of a current iteration and at least one previous iteration of, for example, the output signal(s)) so as to facilitate learning of motion information in association with derivation of the at least one parameter usable for adapting in association with the hypernetwork.

In one embodiment, the input signal(s) can include any one of at least one sensor signal, at least one representation signal, at least one control signal and at least one reference signal, or any combination thereof (i.e., at least one of at least one sensor signal, at least one representation signal, at least one control signal and at least one reference signal; at least one sensor signal, at least one representation signal, at least one control signal and/or at least one reference signal).

In one embodiment, the sensor signal(s) can be generated by, and communicated from, at least one sensor (not shown) which can be coupled to the apparatus. Additionally, the sensor signal(s) can, for example, correspond to a set of images.

In one embodiment, the representation signal(s) can, for example, be generated in association with a Neural Network (NN) associable with the hypernetwork. Additionally, the representation signal(s) can, for example, be communicated from the NN to the apparatus. Moreover, the representation signal(s) can, for example, correspond to at least one feature map representation.

In one embodiment, the input signal(s) can at least one input image capable of being converted to a feature map via a Neural Network (NN) associable with the hypernetwork to obtain at least one feature map representation. The representation signal(s) can, for example, correspond to the feature map representation(s). The representation signal(s) can, for example, be communicated from the NN and received by the apparatus for further processing to compute at least one parameter associable with a NeRF implicit model.

In one embodiment, one or both of the rendering processing and the prerendering processing can, for example, be conducted based on/in association with/by a NeRF implicit model. Additionally, the input signal(s) can, for example, include at least one input image capable of being converted to a feature map via a Neural Network (NN) associable with the hypernetwork to obtain at least one feature map representation and at least one representation signal corresponding to the at least one feature map representation capable of being communicated from the NN and received by the apparatus for further processing to compute at least one parameter associable with the NeRF implicit model, wherein the at least one representation signal is preferably capable of being received by the second module for rendering processing, more preferably with rendering processing is associable with inclusion of at least one time-based parameter in positional encoding to facilitate rendering of data from multiple timestamps so as to facilitate learning of motion information in association with derivation of the at least one parameter usable for adapting in association with the hypernetwork.

In one embodiment, the control signal(s) can, for example, be generated based on user input (e.g., by a user) in association with requesting at least one viewpoint which can include one or both of a previous viewpoint and a current viewpoint (i.e., at least one of a previous viewpoint and a current viewpoint; a previous viewpoint and/or a current viewpoint).

In one embodiment, the reference signal(s) can be associated with one or both of at least one output signal associated with a previous time step and at least one viewpoint request associated with a previous time step (i.e., at least one of at least one output signal associated with a previous time step and at least one viewpoint request associated with a previous time step; at least one output signal associated with a previous time step and/or at least one viewpoint request associated with a previous time step).

In one embodiment, one or both of the rendering processing and the prerendering processing can, for example, be conducted by an online NeRF in combination with model agnostic meta-learning ("online NeRF meta-learning").

In one embodiment, (the step of) comparison based processing can, for example, be comparison based processing of the at least one prerendered signal and at least one previous iteration of the output signal to derive the at least one parameter, and utilizing the derived at least one parameter, in association with online NeRF meta-learning, for adapting in association with the hypernetwork.

In one embodiment, the online NeRF can, for example, utilize one or more multilayer perceptrons (MLP) to evaluate one or more scene functions to create at least one feature map representation.

It is contemplated that in the above manner, the possibility of yielding more stable results during adaptation process can be facilitated, in accordance with an embodiment of the disclosure.

Moreover, in the above manner, the possibility of NeRF based rendering of online data to exhibit temporal consistency can be facilitated, in accordance with an embodiment of the disclosure.

The above-described advantageous aspect(s) of the apparatus of the present disclosure can also apply analogously (all) the aspect(s) of a below described processing method of the present disclosure. Likewise, all below described advantageous aspect(s) of the processing method of the disclosure can also apply analogously (all) the aspect(s) of above described apparatus of the disclosure.

In accordance with an aspect of the disclosure, there is provided a processing method which can be suitable for use in association with at least one neural network (NN). For example, the processing method can be suitable for use with a hypernetwork (e.g., in association with a plurality of NNs), in accordance with an embodiment of the disclosure. In one example application, the processing method can be suitable for use with a hypernetwork in association with Neural Radiance Fields (NeRF) related processing, in accordance with an embodiment of the disclosure.

The processing method can, for example, include one or both of an input step and a processing step, in accordance with an embodiment of the disclosure.

With regard to the input step, one or more input signals can be received, in accordance with an embodiment of the disclosure.

With regard to the processing step, at least one processing task associated with NeRF-related processing can be performed in connection with the input signal(s) in a manner so as to generate one or more output signals, in accordance with an embodiment of the disclosure.

In one embodiment, the processing task(s) can include any one of, or any combination of, the following:

- rendering processing to generate at least one rendered signal associable with a current viewpoint
- prerendering (e.g., or referable to as "retrospective rendering" in accordance with an embodiment of the disclosure) processing to generate at least one prerendered signal associable with a previous viewpoint with reference to the current viewpoint
- comparison based processing of the prerendered signal(s) and the previous iteration(s) of the output signal(s) to derive at least one parameter usable for adapting in association with the hypernetwork. This may help to facilitate consistency over time.

In this regard, it is appreciable that the processing task(s) can, for example, include rendering processing, prerendering processing and/or comparison-based processing (i.e., at least one of rendering processing, prerendering processing and comparison-based processing), in accordance with an embodiment of the disclosure.

In one embodiment, the rendering processing can, for example, be associated with inclusion of at least one time-based parameter in positional encoding to facilitate rendering of data from multiple timestamps so as to facilitate learning of motion information in association with derivation of the at least one parameter usable for adapting in association with the hypernetwork.

It is contemplated that in the above manner, the possibility of yielding more stable results during adaptation process can be facilitated, in accordance with an embodiment of the disclosure.

Moreover, in the above manner, the possibility of NeRF based rendering of online data to exhibit temporal consistency can be facilitated, in accordance with an embodiment of the disclosure.

The present disclosure further contemplates a computer program which can include instructions which, when the program is executed by a computer, cause the computer to carry out one or both of the input step and the processing step, in accordance with an embodiment of the disclosure.

The present disclosure yet further contemplates a computer readable storage medium having data stored therein representing software executable by a computer, the software including instructions, when executed by the computer, to carry out one or both of the input step and the processing step, in accordance with an embodiment of the disclosure.

**Brief Description of the Drawings**

Embodiments of the disclosure are described hereinafter with reference to the following drawings, in which:

Fig. 1a shows a system which can include at least one apparatus, according to an embodiment of the disclosure;

Fig. 1b to Fig. 1c show an example scenario in association with the system of Fig. 1a, according to an embodiment of the disclosure;

Fig, 2 shows the apparatus of Fig, 1a in further detail, according to an embodiment of the disclosure; and

Fig. 3 shows a processing method in association with the system of Fig. 1a, according to an embodiment of the disclosure.

**Detailed Description**

The present disclosure contemplates, generally, the possibility of a combination of online Neural radiance fields (NeRF) and dynamic NeRF, in accordance with an embodiment of the disclosure.

It is contemplated that temporal inconsistency (e.g., where successive rendered frames are not consistent with each other) could be encountered when online NeRF is applied in association with dynamic scenes. This may possibly result in one or more artifacts which could possibly adversely affect, for example, viewing experience of a user viewing one or more image feeds (e.g., rendered viewpoints).

The present disclosure contemplated that temporal/motion consistency can possibly be realized in the context of online NeRF by manner of, for example, combining online NeRF (e.g., hypernetwork based online NeRF) with, for example, model agnostic meta-learning (together called "online NeRF meta-learning"). It is contemplated that one or more rendered frames can be utilized in association with online NeRF meta-learning based adaptation of one or more subsequent frames, in accordance with an embodiment of the disclosure. By realizing temporal/motion consistency, it is contemplated that the artifact(s) can possibly be at least reduced (or preferably eliminated) such that viewing experience (e.g., of a user) can be improved, in accordance with an embodiment of the disclosure.

Moreover, it is contemplated that, in one embodiment, by considering, for example, image-based rendering and/or hypernetwork based approach(es), it is possible that the need for, in one example, training at least one model for every specific scene for the purpose of rendering desired viewpoint(s) can be avoided (or at least mitigated). In another example, issue(s) of video input(s) having to cover all parts of the scene and the network not being capable of performing any learned "infill" operation can possibly be addressed (or at least mitigated). In this manner, computational efficiency can be facilitated, in accordance with an embodiment of the disclosure.

Furthermore, it is contemplated that image-based rendering and/or hypernetwork based approach(es) can be useful to facilitate handling (e.g., processing) of online collected images in NeRF, in accordance with an embodiment of the disclosure.

Generally, the present disclosure further contemplates, for example, a separate mechanism for handling (e.g., processing) time/motion, in accordance with an embodiment of the disclosure. NeRF rendering can, for example, be utilized in association with generating at least one guide image, in accordance with an embodiment of the disclosure. The guide image(s) can, for example, be of a different viewpoint from the target viewpoint. In this regard, a distinct inverse rendering step can be utilized, in accordance with an embodiment of the disclosure.

The present disclosure yet further contemplates the possibility of factor-based expression of uncertainty which may be more constrained and (more) likely to yield more stable results during adaptation process.

Generally, the present disclosure contemplates, for example, a hypernetwork variant of NeRF, in accordance with an embodiment of the disclosure. In one embodiment, a "time" parameter can be included in the positional encoding that is used during the NeRF rendering step. It is contemplated that by doing so, data from multiple timestamps can be rendered, allowing a network (e.g., a neural network) to learn some motion information during a "network parameter adaptation step". For each iteration of execution (in association with the network), in addition to rendering at a current viewpoint, a previous viewpoint can first be rendered. Such pre-rendering can be compared to the previously rendered images, and can be used for adaptation in association with the hypernetwork (e.g., adapting the hypernetwork) to ensure consistency over time.

Appreciably, in the above manner, the possibility of NeRF based rendering of online data to exhibit temporal consistency can be facilitated, in accordance with an embodiment of the disclosure.

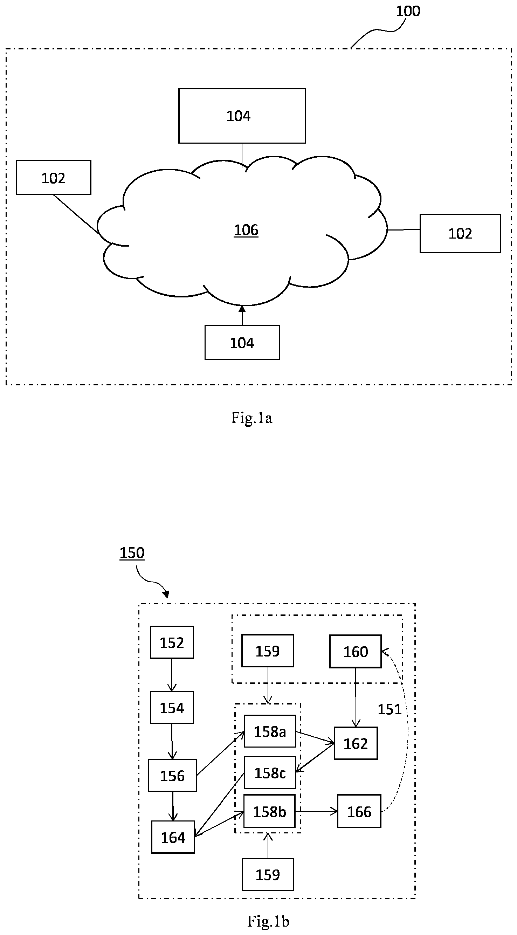

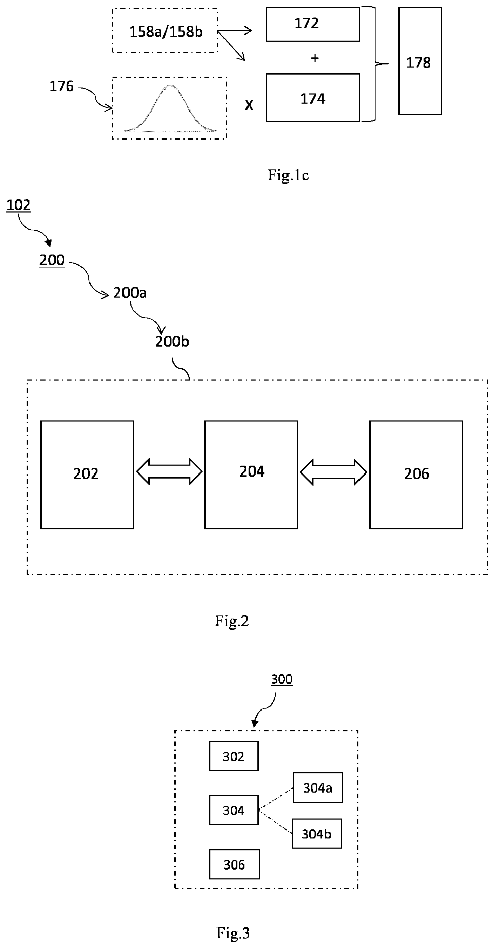

The foregoing will be discussed in further detail with reference to Fig. 1 to Fig. 3 hereinafter.

Referring to Fig. 1a, a system 100 is shown, according to an embodiment of the disclosure. The system 100 can, in one example, be suitable for use in association with at least one vehicle and/or at least one vehicle related application, in accordance with an embodiment of the disclosure. The system 100 can, in another example, be suitable for use in association with a vehicle computer (e.g., a vehicle dashboard computer) which can be configured to render one or more alternate viewpoints based on data communicated from a, for example, surround view camera for the purpose of providing driver assistance., in accordance with an embodiment of the disclosure. In yet another example, the system 100 can be suitable for use in association with a vehicle teleoperation console which can be configured to render one or more (appropriate) viewpoints to enable teleoperation based on data from a, for example, surround view camera (e.g., communicable over a network such as a communication network), in accordance with an embodiment of the disclosure. In yet another additional example, the system 100 can be suitable for use in association with a simulation system for an autonomous vehicle which can be configured to render one or more current virtual viewpoints of a simulated vehicle inside a scene based on, for example, a multitude of camera images associated with a real scene, in accordance with an embodiment of the disclosure. Other examples (e.g., which not be related to vehicles and/or vehicle related applications) such as computer gaming, virtual 3D (3 dimensional) touring (e.g., of one or more places of interest) and/or providing a 3D virtual experience (e.g., via a browser, via a desktop application and/or via a mobile device app etc.) can possibly be useful, in accordance with embodiment(s) of the disclosure.

As shown, the system 100 can include one or more apparatuses 102, one or more devices 104 and, optionally, a communication network 106, in accordance with an embodiment of the disclosure.

The apparatus(es) 102 can be coupled to the device(s) 104. Specifically, the apparatus(es) 102 can, for example, be coupled to the device(s) 104 via the communication network 106.

In one embodiment, the apparatus(es) 102 can be coupled to the communication network 106 and the device(s) 104 can be coupled to the communication network 106. Coupling can be by manner of one or both of wired coupling and wireless coupling. The apparatus(es) 102 can, in general, be configured to communicate with the device(s) 104 via the communication network 106, according to an embodiment of the disclosure.

The system 100 can, for example, be suitable for use in association with Neural Radiance Fields (NeRF) related processing, in accordance with an embodiment of the disclosure. In a more specific example, the system 100 can be suitable for use with a hypernetwork in association with NeRF-related processing such as NeRF rendering, in accordance with an embodiment of the disclosure. In yet a more specific example, the system 100 can be suitable for use in association with improving temporal consistency in online dynamic neural radiance field rendering (also called online NeRF), in accordance with an embodiment of the disclosure.

The apparatus(es) 102 can, for example, correspond to one or more computers (e.g., laptops, desktop computers and/or electronic mobile devices having computing capabilities such as Smartphones and electronic tablets).

In general, the apparatus(es) 102 can, for example, be configured to perform one or more processing tasks. The processing task(s) can, for example, include at least one processing task in association with NeRF-related processing, in accordance with an embodiment of the disclosure. For example, the apparatus(es) 102 can be configured to receive one or more input signals and process the input signal(s) (and/or /facilitate processing of the input signal(s)) in association with NeRF-related processing in a manner so as to generate one or more output signals, in accordance with an embodiment of the disclosure. The output signal(s) can, for example, be communicated from the apparatus(es) 102, in accordance with an embodiment of the disclosure. The apparatus(es) 102 will be discussed in further detail with reference to Fig. 2, according to an embodiment of the disclosure.

The device(s) 104 can, for example, carry a deep learning type algorithm/network or can, for example correspond to a deep learning type algorithm/network. It is contemplated that the device(s) 104 can, for example, generally be associated with at least one Neural Network (NN), in accordance with an embodiment of the disclosure. In one example, the device(s) 104 can correspond to one or more host devices (e.g., one or more computers, or a network of computers) which carry a NN. In another example, a device 104 can correspond to a database associated with a NN (e.g., an artificial NN). In one embodiment, a device 104 can, for example, correspond to a node in a NN and a number of devices 104 (i.e., corresponding to a plurality of nodes) can be coupled (e.g., interlinked/interconnected) to form a NN. In another embodiment, a device 104 can correspond to a host device carrying a plurality of nodes forming a NN. In yet another embodiment, a device 104 can, for example, correspond to a first host device carrying at least one node (e.g., a plurality of nodes) and another device 104 can, for example, correspond to a second host device carrying another at least one node (e.g., another plurality of nodes), and the first and second host devices can be coupled. In yet another further embodiment, a device 104 (e.g., a first device 104) can be associated with a NN (e.g., a first NN) and another device 104 (e.g., a second device 104) can be associated with another NN (e.g., a second NN), and the first and second devices 104 can be coupled.

Generally, the device(s) 104 can, for example, be capable of being configured to receive one or both of the input signal(s) and the output signal(s) for further processing, in accordance with an embodiment of the disclosure. For example, the device(s) 104 can be configured to receive at least one input signal from one or both of the apparatus(es) 102 and at least one sensor (not shown). The sensor(s) can, for example, be coupled to one or both of the apparatus(es) 102 and the device(s), in accordance with an embodiment of the disclosure. Coupling can, for example, be by manner of one or both of wired coupling and wireless coupling.

The communication network 106 can, for example, correspond to an Internet communication network, in accordance with an embodiment of the disclosure. In another example, the communication network 106 can correspond to a telecommunication network. Communication (i.e., between the apparatus(es) 102 and the database(s) 104) via the communication network 106 can be by manner of one or both of wired communication and wireless communication.

The system 100 will now be discussed in further detail in accordance with an example scenario 150 with reference to Fig. 1b and Fig. 1c, in accordance with an embodiment of the disclosure, hereinafter.

In the example scenario 150, as shown in Fig. 1b, at least one apparatus 102 can be configured to receive one or more input signals for processing to generate/produce one or more output signals. An output signal can, for example, include/correspond to a rendered image in association with a requested viewpoint which can be based on one or more control signals as will be discussed later in further detail in connection with the input signal(s) hereinafter.

The input signal(s) can include any one of one or more sensor signals, one or more representation signals, one or more control signals and one or more reference signals, or any combination thereof (e.g., at least one sensor signal, at least one representation signal, at least one control signal and/or at least one reference signal).

The sensor signal(s) can, for example, be generated by and communicated from one or more sensors (not shown) which can be coupled to the apparatus(es) 102, in accordance with an embodiment of the disclosure. The sensor(s) can, for example, include/correspond to image sensor(s) (e.g., camera sensor(s) such as surround view type camera sensor(s) carried by a vehicle) and the sensor signal(s) can include/correspond to a set of images, in accordance with an embodiment of the disclosure. For example, the input signal(s) can include/correspond to one or more input images, in accordance with an embodiment of the disclosure.

The representation signal(s) can, for example, be generated in association with a NN (e.g., a device 104) and communicated from the NN to at least one apparatus 102, in accordance with an embodiment of the disclosure. The representation signal(s) can, for example, include/correspond to a feature map representation as will be discussed later in further detail, in accordance with an embodiment of the disclosure.

The control signal(s) can, for example, be generated based on user input (e.g., by a user), in accordance with an embodiment of the disclosure. In one example, a user using the apparatus 102 can generate the control signal(s) for further processing. In this regard, an apparatus 102 can, for example, include an input portion (not shown) and/or a user interface (not shown) which can be used by a user to generate the control signal(s), in accordance with an embodiment of the disclosure. In another example, a user can, using one apparatus (e.g., a first apparatus) 102, generate the control signal(s) which can be communicated to another apparatus (e.g., a second apparatus) 102 for further processing. In this regard, the first apparatus 102 can, for example, include an input portion (not shown) and/or a user interface (not shown) which can be used by a user to generate the control signal(s) whereas the second apparatus 102 need not necessarily include such an input portion and/or such a user interface, in accordance with an embodiment of the disclosure. The control signal(s) can, for example, be further processed in association with obtaining one or more requested viewpoints, in accordance with an embodiment of the disclosure. The requested viewpoint(s) can, for example, be usable in association with rendering one or more output images which can be relative to a current pose (e.g., a current pose of a vehicle), as will be discussed later in further detail, in accordance with an embodiment of the disclosure.

The reference signal(s) can, for example, include/correspond to one or both of at least one output signal associated with a previous time step 151 (i.e., with reference to a current point in time) such as a rendered image from a previous point in time and at least one viewpoint request associated with a previous time step (i.e., with reference to a current point in time) such as a viewpoint based on which a previously rendered image was created from (e.g., a previously rendered image associated with a pose of a vehicle relative to a current pose of the vehicle, accounting for the ego-motion of the vehicle).

In the example scenario 150, the apparatus(es) 102 can be configured to receive the input signal(s) (e.g., input image(s)) and communicate the input signal(s) to the device(s) 104 (i.e., referable to as a NN) for processing by manner of conversion-based processing. For example, the input signal(s) can include input image(s) 152 which can be converted (e.g., by manner of conversion-based processing) to a feature map 154 (e.g., which can be associated with one or more feature vectors) via a NN to obtain at least one feature map representation. In one embodiment, the input signal(s) (e.g., from an image sensor such as a camera) can, for example, include at least one image corresponding to at least one scene (e.g., a 3D scene) which can be associated with at least one latent vector. In one example, a convolutional or transformer-based image encoder, such as a convolutional NN (CNN)-based encoder, can possibly be useful for directly inferring the latent vector(s) (i.e., referable to as the feature vector(s)) from an image.

In another embodiment, the input signal(s) can be based on one or more datasets which can be communicable from a database (e.g., a device 104) carrying the dataset(s). An example of dataset(s) from a public-based database can be RealEstate10K (i.e., a large dataset of camera poses corresponding to 10 million frames derived from about 80,000 video clips, gathered from about 10,000 videos available from public video platform(s)). Further examples can be dataset(s) available from www.matthewtancik.com/nerf.

Earlier mentioned, feature map representation(s) can be obtained based on the feature map 154. Representation signal(s) corresponding to/which can include the feature map representation(s) can be communicated from the NN and received by the apparatus(es) 102 for further processing to compute one or more parameters (e.g., network parameter(s) such as mean and/or compressed covariance) 156 which can be associated with a NeRF implicit model. The present disclosure contemplates that, in general, the NeRF can be capable of representing a scene via value(s) of multilayer perceptron (MLP) parameter(s). In one example, the NeRF can be associated with a scene function which can, for example, be represented as a function of a 6D vector variable whose inputs can be ray coordinates partitioned into position and/or orientation, with at least one emitted color and/or volume density being possible output(s). In one example, MLP can possible be utilized by NeRF as a scene function. In this regard, the earlier mentioned scene function can, for example, be approximated by a NN (e.g., CNN) such that volume density can be dependent (e.g., only dependent) on position whereas the emitted color can be dependent on the position and ray orientation to facilitate multi-view consistency, in accordance with an embodiment of the disclosure. In one specific example, where a camera communicates the input signal(s), an image rendering process can be based on rendering associated with a scene function as approximated by a NN and input parameters such as the position and/or orientation. It is appreciable that the earlier mentioned 6D function (e.g., 6D vector variable) can be varied according to requirement(s). For example, in accordance with an embodiment of the disclosure, the NeRF can be associated with a scene function which can, for example, be represented as a function of a 7D vector variable in consideration of the inclusion of (additional) time-based/time-related parameter(s) to be computed.

Generally, it is contemplated that a feature map can, for example, be generated by manner of applying filter(s) and/or feature detector(s) to an input image and/or a prior feature map (e.g., the feature map output of one or more prior layers associated with a CNN). In one embodiment, the feature map 154 can, for example, be obtained by manner of encoding one or more context element(s) via a ResNet (Residual Network) -based encoder (e.g., ResNet-50 which is a type of convolutional neural network that is 50 layers deep). The context element(s) can, for example, correspond to the input image(s) which can include parameter(s) such as position(s) and/or orientation(s). In this regard, in one embodiment, the input(s) can be a collection of context element(s), where each element(s) can include an image, and corresponding position(s) and/or orientation(s). It is contemplated that the context element(s) can, for example, correspond to different viewpoint(s) of a particular scene, forming a context set (i.e., the context set can be based on a plurality of context elements). In one example, the input parameters can be mapped into coordinate(s)/parameter(s) which can relate to positions associated with each pixel and ray orientation associated with each pixel. The orientations can, for example, be expressed as 3-Dimensional (3D) unit vectors. In a ResNet based example, the ResNet maps the input image(s) to a vector which can contain all the parameters of the MLP (which can be considered to be of quite high dimension, likely more than 1000 parameters).

Moreover, it is appreciable that NeRF can be generally considered to be based on a hierarchical structure. Specifically, the general overall NeRF network architecture can, for example, be based on a coarse network and a fine network. In this regard, a first scene function (e.g., a "coarse" scene function) can, for example, be evaluated at various points (e.g., a first set of points) along the rays corresponding to each image pixel and based on the density values at these coarse points (e.g., evaluation at various points along the rays) another set of points (e.g., a second set of points) can be re-sampled along the same rays. A second scene function (e.g., a "fine" scene function) can be evaluated at the re-sampled points (e.g., the second set of points) to facilitate in obtaining resulting (fine) densities and colors usable in, for example, NeRF rendering (e.g., volume rendering mechanism associated with NeRF). In a general example, to enable gradient updates of the "coarse" scene function, NeRF can be configured to reconstruct pixel colors based on outputs associated with both the "coarse" scene function and the "fine" scene function, and minimize a sum of the coarse and fine pixel errors.

In this regard, it is appreciable that the output (e.g., the representation signal(s)) of one NN (e.g., a first NN 158a) can be computed to set the parameter(s) (e.g., to compute the parameter(s) associable with a NeRF implicit model) of another NN (i.e., a second NN 158b). This can be known as a hypernetwork structure. Specifically, a hypernetwork structure can, for example, be based on the output of a NN (e.g., a first NN) which can be computed to set the parameter(s) of another NN (e.g., a second NN), in accordance with an embodiment of the disclosure. The computed parameter(s) 159 (e.g., raytracing parameter(s)) associable with a NeRF implicit model (e.g., which can, for example, correspond to/be associated with a NN) can be input to the NeRF implicit model. The computed parameter(s) 159 can, for example, include one or both of position/incidence angle and position/viewpoint angle, in accordance with an embodiment of the disclosure. Moreover, it is appreciable that at least one of the computed parameters 159 can be time-based/time-related. It is contemplated that a possible convention for denoting time 't" can be to regard current data as origin reference at time being at "zero" (i.e., "t=0"), and data from previous timestep(s) (i.e., previous iteration(s)) as negative time reference(s) with respect to the origin reference, in accordance with an embodiment of the disclosure.

Furthermore, in the example scenario 150, using point estimate of the NeRF implicit model parameter(s), a processing task of NeRF rending of a previous viewpoint (i.e., based on the aforementioned control signal(s)) can be performed. Moreover, a processing task of comparing a currently (i.e., newly) rendered image of the previous viewpoint with a previously rendered image 160 (e.g., a rendered image which can be associated with a previous time step 151 which may have been presented for visual consumption by a user previously). Based on the comparison, a loss function 162 can, for example, be defined and one or more (detected) discrepancies can, for example, be propagated (e.g. by computing gradient of the loss function back onto predicted NeRF implicit model parameters), in accordance with an embodiment of the disclosure. For example, a distinct inverse rendering step 158c can be utilized, in accordance with an embodiment of the disclosure.

Additionally, in the example scenario 150, the NeRF implicit model parameter(s) can be adapted (i.e., one or more adapted NeRF implicit model parameters 164) based on, for example, one or both of backpropagated error (i.e., the aforementioned discrepancy/discrepancies which can be propagated) and uncertainty information/data which can be predicted, in accordance with an embodiment of the disclosure. The present disclosure contemplates that this can be carried out by manner of processing based on, for example, information fusion using, for example, Bayes rule, in accordance with an embodiment of the disclosure.

Moreover, in the example scenario, based on the adapted NeRF implicit model parameter(s) 164, a processing task of rendering in association with a currently (i.e., presently) requested viewpoint (e.g., based on the control signal(s)) can be performed to obtain an image 166 which can be presented (e.g., visually perceivable) to a user (e.g., for visual consumption by the user). As mentioned earlier, a requested viewpoint can be based on the control signal(s), in accordance with an embodiment of the disclosure. Moreover, the earlier mentioned output signal(s) can, for example, include/correspond to the image 166 (i.e., a currently requested viewpoint), in accordance with an embodiment of the disclosure.

It is generally contemplated that training (e.g., of the first NN and/or the second NN) can, for example, be based on standard backpropagation based gradient descent, in accordance with an embodiment of the disclosure. The possibility that access to a dataset of images with known viewpoints such that a subset of the viewpoints may be used to predict another viewpoint in order to train at least one NN (e.g., the first NN and/or the second NN) is contemplated, in accordance with an embodiment of the disclosure.

As an example how an above-described hypernetwork (i.e., first NN and second NN) may be trained, a training dataset may be provided to the first NN (e.g., ResNet) and/or second NN (e.g., MLP) and following standard steps for training a general NN may be followed.

For the above-mentioned first NN and/or second NN, a public-based database such as RealEstate10K can be used to train the neural network.

Before training the neural network(s) according to the figure(s) as described in tables 1 to 3 below, the weights are randomly initialize to numbers between 0.01 and 0.1, while the biases are randomly initialize to numbers between 0.1 and 0.9.

Subsequently, the first observations of the dataset are loaded into the input layer of the neural network and the output value(s) is generated by forward-propagation of the input values of the input layers. Afterwards the following loss function is used to calculate loss with the output value(s):

Mean Square Error (MSE):

$$MSE \ = \ \frac{1}{n} \ \Sigma \ \underbrace{\left( y \ - \ \widehat{y} \right)^2}_{\substack{\text{The square of the difference} \\ \text{between actual and} \\ \text{predicted}}}$$

wherein n is the number of neurons in the output layer and y is the real value while Y is the calculated output.

The weights and biases are subsequently updated by an AdamOptimizer with a learning rate of 0.001. It is to be noted that the other parameters of the AdamOptimizer should be set to default values. For example:

    beta_1 = 0.9
    beta_2 = 0.999
    eps = 1e-08
    weight_decay = 0

The steps described above should be repeated with the next set of observations until all the observations are used for training. This represents the first training epoch. This was repeated until 10 epochs were done.

Moreover, the present disclosure contemplates, in accordance with an embodiment of the disclosure, the possibility of predicting/deriving not only a point estimate of the parameters, but also one or more additional parameters/values associable with uncertainty in the point estimate. For example, as shown in Fig. 1c, one or both of a mean value of at least one parameter vector 172 and a low rank matrix 174 (e.g., which can define a small number of factors that can be adapted during an online operation) can be predicted. Furthermore, magnitude scaling 176 can possibly be applied in respect to/in association with the low rank matrix 174, in accordance with an embodiment of the disclosure. Moreover, as shown in Fig. 1c, a low dimensional set of factors can be output 178, in accordance with an embodiment of the disclosure. It is contemplated that by manner of reducing the number of degrees of freedom in the adaptation, it can be expected that more stable results could be obtained, in accordance with an embodiment of the disclosure.

It is contemplated that the possibility of factor-based expression of uncertainty which may be more constrained and (more) likely to yield more stable results during adaptation process, in accordance with an embodiment of the disclosure.

Moreover, in the above manner, the possibility of NeRF based rendering of online data to exhibit temporal consistency can be facilitated, in accordance with an embodiment of the disclosure.

The aforementioned apparatus(es) 102 will be discussed in further detail with reference to Fig. 2 hereinafter.

Referring to Fig. 2, an apparatus 102 is shown in further detail in the context of an example implementation 200, according to an embodiment of the disclosure.

In the example implementation 200, the apparatus 102 can correspond to an electronic module 200a which can be capable of being configured to receive one or more input signals, in accordance with an embodiment of the disclosure. The electronic module 200a can, for example, be configured to process and/or facilitate processing of the input signal(s) to generate one or more output signals, in accordance with an embodiment of the disclosure. Processing and/or facilitation of processing of the input signal(s) can, for example, be in association with NeRF-related processing, in accordance with an embodiment of the disclosure.

As mentioned earlier, the input signal(s) can include any one of one or more sensor signals, one or more representation signals, one or more control signals and one or more reference signals, or any combination thereof (e.g., at least one sensor signal, at least one representation signal, at least one control signal and/or at least one reference signal), in accordance with an embodiment of the disclosure.

Moreover, the output signal(s) can, for example, include/correspond to one or both of at least one image associated with a previously requested viewpoint and at least one image associated with a currently requested viewpoint (e.g., image(s) associated with a previous viewpoint and/or image(s) associated with a current viewpoint).

In the example implementation 200, NeRF-related processing can include any one of, or any combination of, the following:

- Communication-based processing
- Conversion-based processing
- Derivation-based processing
- Rendering-based processing
- Comparison-based processing
- Inverse rendering-based processing
- Adaption-based processing

In this regard, NeRF-related processing can, for example, include communication-based processing, conversion-based processing, derivation-based processing, rendering-based processing and/or adaption-based processing, in accordance with an embodiment of the disclosure.

In one example, NeRF-related processing can include communication-based processing, conversion-based processing, derivation-based processing, rendering-based processing and adaption-based processing, in accordance with an embodiment of the disclosure.

With regard to communication-based processing, the apparatus 102 can, for example, be configured to one or both of receive and communicate the input signal(s), in accordance with an embodiment of the disclosure. In one example, the input signal(s) (e.g., sensor signal(s)) can be communicated from the sensor(s) and received by the apparatus 102 for processing. In another example, the input signal(s) (e.g., representation signal(s)) can be communicated from at least one NN (e.g., a device 104) and received by the apparatus 102 for processing. In yet another example, the input signal(s) can be communicated from the sensor(s) and at least one NN, and received by the apparatus 102 for processing.

With regard to conversion-based processing, the input signal(s) can, for example, include input image(s) 152 which can be converted by manner of conversion-based processing to a feature map 154 (e.g., which can be associated with one or more feature vectors) via at least one NN to obtain at least one feature map representation. In this regard, it is appreciable that the apparatus 102 can, for example, be considered to facilitate processing of the input signal(s) by manner of communicating the input signal(s) to at least one NN for further processing. As mentioned earlier, Representation signal(s) corresponding to/which can include the feature map representation(s) can, for example, be communicated (e.g., from at least one NN) to the apparatus 102 for further processing, in accordance with an embodiment of the disclosure.

With regard to derivation-based processing, the apparatus 102 can be configured to process the representation signal(s) to compute, for example, one or more parameters (e.g., network parameter(s) such as mean and/or compressed covariance) 156 which can be associated with a NeRF implicit model, in accordance with an embodiment of the disclosure.

With regard to rendering-based processing, the apparatus 102 can be configured to perform at least one processing task of NeRF rendering. The processing task(s) of NeRF rendering can, for example, include one or both of prerendering processing and rendering processing, in accordance with an embodiment of the disclosure. NeRF rendering can, for example, be based on one or both of at least one requested previous viewpoint (i.e., at least one previous viewpoint) and at least one requested current viewpoint (i.e., at least one current viewpoint), in accordance with an embodiment of the disclosure. NeRF rendering based on at least one previous viewpoint can, for example, be associated with prerendering processing and can, for example, be based on the control signal(s). A current viewpoint can, for example, be associated with rendering processing and can, for example, relate to at least one output signal generated at a current (i.e., present) point in time. In this regard, one or more rendered signals can, for example, be generated based on a current viewpoint, in accordance with an embodiment of the disclosure. A previous viewpoint can, for example, relate to at least one output signal generated at a previous point in time with respect to the current (i.e., present) point in time. In this regard, one or more prerendered signals can, for example, be generated based on a previous viewpoint, in accordance with an embodiment of the disclosure. Appreciably, the aforementioned reference signal(s) can, for example, be associated with/include/correspond to the prerendered signal(s), in accordance with an embodiment of the disclosure. NeRF rendering based on at least one requested current viewpoint can, for example, be based on at least one adapted NeRF implicit model parameter.

With regard to comparison-based processing, the apparatus 102 can, for example, be configured to perform at least one processing task of comparing at least one signal currently rendered in association with at least one previous viewpoint (e.g., a currently rendered image of the previous viewpoint) with at least one signal previously rendered in association with at least one previous viewpoint (e.g., a previous iteration, with respect to a current point in time, of the output signal(s) which can include/correspond to a previously rendered image) in a manner so as to derive/generate at least one loss function, in accordance with an embodiment of the disclosure. In one embodiment, the signal(s) rendered in association with the previous viewpoint(s) can, for example, correspond to/include one or more previously generated output signals (e.g., iteration(s) of the output signal(s) generated at an earlier in time with respect to a current point in time). For example, the prerendered signal(s) and at least one previous iteration of the output signal(s) can be compared, in accordance with an embodiment of the disclosure.

With regard to inverse rendering-based processing, the apparatus 102 can, for example, be configured to perform at least one processing task associated with at least one distinct inverse rendering step 158c. As mentioned earlier, based on the comparison (e.g., in association with the comparison-based processing), a loss function can, for example, be defined and one or more (detected) discrepancies can, for example, be propagated (e.g. by computing gradient of the loss function back onto predicted NeRF implicit model parameters), in accordance with an embodiment of the disclosure.

With regard to adaptation-based processing, the apparatus 102 can, for example, be configured to perform at least one processing task of adapting the NeRF implicit model parameter(s) based on, for example, one or both of backpropagated error (i.e., the aforementioned discrepancy/discrepancies which can be propagated) and uncertainty information/data which can be predicted, in accordance with an embodiment of the disclosure.

The electronic module 200a can, for example, correspond to a mobile device (e.g., a computing device) which can, for example, be carried by a user, in accordance with an embodiment of the disclosure.

The electronic module 200a can, for example, include a casing 200b. Moreover, the electronic module 200a can, for example, carry any one of a first module 202, a second module 204, a third module 206, or any combination thereof.

In one embodiment, the electronic module 200a can carry a first module 202, a second module 204 and/or a third module 206. In a specific example, the electronic module 200a can carry a first module 202, a second module 204 and a third module 206, in accordance with an embodiment of the disclosure.

In this regard, it is appreciable that, in one embodiment, the casing 200b can be shaped and dimensioned to carry any one of the first module 202, the second module 204 and the third module 206, or any combination thereof.

The first module 202 can be coupled to one or both of the second module 204 and the third module 206. The second module 204 can be coupled to one or both of the first module 202 and the third module 206. The third module 206 can be coupled to one or both of the first module 202 and the second module 204. In one example, the first module 202 can be coupled to the second module 204 and the second module 204 can be coupled to the third module 206, in accordance with an embodiment of the disclosure. Coupling between the first module 202, the second module 204 and/or the third module 206 can, for example, be by manner of one or both of wired coupling and wireless coupling.

Each of the first module 202, the second module 204 and the third module 206 can correspond to one or both of a hardware-based module and a software-based module, according to an embodiment of the disclosure.

In one example, the first module 202 can correspond to a hardware-based receiver which can be configured to receive the input signal(s).

The second module 204 can, for example, correspond to a hardware-based processor which can be configured to perform one or more processing tasks in association with any one of, or any combination of, the following:

- Communication-based processing
- Conversion-based processing
- Derivation-based processing
- Rendering-based processing
- Comparison-based processing
- Inverse rendering-based processing
- Adaption-based processing

The third module 206 can correspond to a hardware-based transmitter which can be configured to communicate one or both of the input signal(s) and the output signal(s) from the electronic module 200a. The output signal(s) and/or the input signal(s) can, for example, be communicated from the electronic module 200a to the device(s) 104, in accordance with an embodiment of the disclosure.

The present disclosure contemplates the possibility that the first and second modules 202/204 can be an integrated software-hardware based module (e.g., an electronic part which can carry a software program/algorithm in association with receiving and processing functions/an electronic module programmed to perform the functions of receiving and processing). The present disclosure further contemplates the possibility that the first and third modules 202/206 can be an integrated software-hardware based module (e.g., an electronic part which can carry a software program/algorithm in association with receiving and transmitting functions/an electronic module programmed to perform the functions of receiving and transmitting). The present disclosure yet further contemplates the possibility that the first and third modules 202/206 can be an integrated hardware module (e.g., a hardware-based transceiver) capable of performing the functions of receiving and transmitting.

In view of the foregoing, it is appreciable that the present disclosure generally contemplates an apparatus 102 (e.g., which can correspond to an electronic module 200a, in accordance with an embodiment of the disclosure) which can be coupled to at least one device 104 (i.e., referable to as "neural network"), in accordance with an embodiment of the disclosure.

Specifically, in one embodiment, the present disclosure contemplates an apparatus 102 which can be suitable for use with, for example, at least one neural network (NN).

More specifically, in one embodiment, the present disclosure contemplates an apparatus 102 which can be suitable for use with a hypernetwork (e.g., in association with a plurality of NNs). In one example application, the apparatus 102 can be suitable for use with a hypernetwork in association with Neural Radiance Fields (NeRF) related processing, in accordance with an embodiment of the disclosure.

The apparatus 102 can, for example, include a first module 202 and a second module 204, in accordance with an embodiment of the disclosure. The second module 204 can be coupled to the first module 202.

The first module 202 can, for example, be configured to receive at least one input signal, in accordance with an embodiment of the disclosure.

The second module 204 can, for example, be configured to one or both of process the received input signal(s) to generate at least one output signal, in accordance with an embodiment of the disclosure.

In one embodiment, processing by the second module 204 can, for example, include any one of, or any combination of:

- Rendering processing
- Prerendering processing
- Comparison based processing

Specifically, in one embodiment, the second module 204 can be configured to process the input signal(s) by manner of rendering processing, prerendering processing and/or comparison-based processing. For example, the second module 204 can be configured to process the input signal(s) by manner of rendering processing, prerendering processing and comparison-based processing.

In one embodiment, the second module 204 can be configured to perform at least one processing task of rendering processing to generate at least one rendered signal associable with a current viewpoint.

In one embodiment, the second module 204 can be configured to perform at least one processing task of prerendering processing to generate at least one prerendered signal associable with a previous viewpoint with reference to the current viewpoint.

In one embodiment, the second module 204 can be configured to perform at least one processing task of comparison-based processing of comparing the prerendered signal(s) and at least one previous iteration of the output signal so as to derive at least one parameter usable for adapting in association with the hypernetwork in a manner so as to facilitate consistency over time.

Moreover, in one embodiment, rendering processing can be associated with inclusion of at least one time-based parameter in positional encoding to facilitate rendering of data from multiple timestamps (e.g., data based on one or both of a current iteration and at least one previous iteration of, for example, the output signal(s)) so as to facilitate learning of motion information in association with derivation of the at least one parameter usable for adapting in association with the hypernetwork.

In one embodiment, the input signal(s) can include any one of at least one sensor signal, at least one representation signal, at least one control signal and at least one reference signal, or any combination thereof (i.e., at least one of at least one sensor signal, at least one representation signal, at least one control signal and at least one reference signal; at least one sensor signal, at least one representation signal, at least one control signal and/or at least one reference signal).

In one embodiment, the sensor signal(s) can be generated by, and communicated from, at least one sensor (not shown) which can be coupled to the apparatus. Additionally, the sensor signal(s) can, for example, correspond to a set of images.

In one embodiment, the representation signal(s) can, for example, be generated in association with a Neural Network (NN) associable with the hypernetwork. Additionally, the representation signal(s) can, for example, be communicated from the NN to the apparatus 102. Moreover, the representation signal(s) can, for example, correspond to at least one feature map representation.

In one embodiment, the input signal(s) can at least one input image capable of being converted to a feature map via a Neural Network (NN) associable with the hypernetwork to obtain at least one feature map representation. The representation signal(s) can, for example, correspond to the feature map representation(s). The representation signal(s) can, for example, be communicated from the NN and received by the apparatus 102 for further processing to compute at least one parameter associable with a NeRF implicit model.

In one embodiment, one or both of the rendering processing and the prerendering processing can, for example, be conducted based on/in association with/by a NeRF implicit model. Additionally, the input signal(s) can, for example, include at least one input image capable of being converted to a feature map via a Neural Network (NN) associable with the hypernetwork to obtain at least one feature map representation and at least one representation signal corresponding to the at least one feature map representation capable of being communicated from the NN and received by the apparatus 102 for further processing to compute at least one parameter associable with the NeRF implicit model, wherein the at least one representation signal is preferably capable of being received by the second module for rendering processing, more preferably with rendering processing is associable with inclusion of at least one time-based parameter in positional encoding to facilitate rendering of data from multiple timestamps so as to facilitate learning of motion information in association with derivation of the at least one parameter usable for adapting in association with the hypernetwork.

In one embodiment, the control signal(s) can, for example, be generated based on user input (e.g., by a user) in association with requesting at least one viewpoint which can include one or both of a previous viewpoint and a current viewpoint (i.e., at least one of a previous viewpoint and a current viewpoint; a previous viewpoint and/or a current viewpoint).

In one embodiment, the reference signal(s) can be associated with one or both of at least one output signal associated with a previous time step and at least one viewpoint request associated with a previous time step (i.e., at least one of at least one output signal associated with a previous time step and at least one viewpoint request associated with a previous time step; at least one output signal associated with a previous time step and/or at least one viewpoint request associated with a previous time step).

In one embodiment, one or both of the rendering processing and the prerendering processing can, for example, be conducted by an online NeRF in combination with model agnostic meta-learning ("online NeRF meta-learning").

In one embodiment, (the step of) comparison based processing can, for example, be comparison based processing of the at least one prerendered signal and at least one previous iteration of the output signal to derive the at least one parameter, and utilizing the derived at least one parameter, in association with online NeRF meta-learning, for adapting in association with the hypernetwork.

In one embodiment, the online NeRF can, for example, utilize one or more multilayer perceptrons (MLP) to evaluate one or more scene functions to create at least one feature map representation.

It is contemplated that in the above manner, the possibility of yielding more stable results during adaptation process can be facilitated, in accordance with an embodiment of the disclosure.

Moreover, in the above manner, the possibility of NeRF based rendering of online data to exhibit temporal consistency can be facilitated, in accordance with an embodiment of the disclosure.

The above-described advantageous aspect(s) of the apparatus(es) 102 of the present disclosure can also apply analogously (all) the aspect(s) of a below described processing method of the present disclosure. Likewise, all below described advantageous aspect(s) of the processing method of the disclosure can also apply analogously (all) the aspect(s) of above described apparatus(es) 102 of the disclosure. It is to be appreciated that these remarks apply analogously to the earlier discussed system 100 of the present disclosure.

Referring to Fig. 3, a processing method in association with the system 100 is shown, according to an embodiment of the disclosure. The processing method 300 can, for example, be suitable for use in association with at least one neural network (NN) (e.g., at least one] device 104 as discussed earlier with reference to Fig. 1). In one example application, the processing method 300 can be suitable for use in association with at least one NN in connection with NeRF-related processing, in accordance with an embodiment of the disclosure.

The processing method 300 can, for example, include any one of an input step 302, a processing step 304 and an output step 306, or any combination thereof, in accordance with an embodiment of the disclosure.

In one embodiment, the processing method 300 can, for example, include an input step 302 and a processing step 304. In another embodiment, the processing method 300 can, for example, include a processing step 304. In yet a further embodiment, the processing method 300 can, for example, include the processing step 304 and the output step 306. In yet another further embodiment, the processing method 300 can, for example, include an input step 302, a processing step 304 and an output step 306.

With regard to the input step 302, one or more input signal(s) can be received for processing. For example, the input signal(s) can be received by the apparatus(es) 102 for processing, in accordance with an embodiment of the disclosure.

With regard to the processing step 304, one or more processing tasks can be performed. For example, the apparatus(es) 102 can, in accordance with an embodiment of the disclosure, be configured to perform one or more processing tasks in association with any one of, or any combination of, the following:

- Communication-based processing
- Conversion-based processing
- Derivation-based processing
- Rendering-based processing
- Comparison-based processing
- Inverse rendering-based processing
- Adaption-based processing

In one embodiment, the apparatus(es) 102 can, for example, be configured to perform at least one processing task in association with rendering-based processing. Moreover, as mentioned earlier, with regard to rendering-based processing, the apparatus 102 can be configured to perform at least one processing task of NeRF rendering. The processing task(s) of NeRF rendering can, for example, include one or both of prerendering processing 304a and rendering processing 304b, in accordance with an embodiment of the disclosure.

With regard to the output step 306, one or more output signal(s) can be generated. For example, the output signal(s) can be generated by the apparatus(es) 102, in accordance with an embodiment of the disclosure. In one embodiment, the output signal(s) can be visually perceived by a user via, for example, at least one display portion (not shown) carried by the apparatus(es) 102.

The present disclosure further contemplates a computer program (not shown) which can include instructions which, when the program is executed by a computer (not shown), cause the computer to carry out any one of the input step 302, the processing step 304 and the output step 306, or any combination thereof (i.e., the input step 302, the processing step 304 and/or the output step 306) as discussed with reference to the processing method 300. In one embodiment, the computer program can include instructions which, when the program is executed by a computer (not shown), cause the computer to carry out, for example, the input step 302 and the processing step 304.

The present disclosure yet further contemplates a computer readable storage medium (not shown) having data stored therein representing software executable by a computer (not shown), the software including instructions, when executed by the computer, to carry out any one of the input step 302, the processing step 304 and the output step 306, or any combination thereof (i.e., the input step 302, the processing step 304 and/or the output step 306) as discussed with reference to the processing method 300. In one embodiment, the computer readable storage medium can have data stored therein representing software executable by a computer (not shown), the software including instructions, when executed by the computer, to carry out , for example, the input step 302 and the processing step 304.

In view of the foregoing, it is appreciable that the present disclosure generally contemplates a processing method 300 which can be suitable for use in association with at least one neural network (NN) (e.g., at least one device 104 as discussed earlier with reference to Fig. 1). For example, the processing method 300 can be suitable for use with a hypernetwork (e.g., in association with a plurality of NNs), in accordance with an embodiment of the disclosure. In one example application, the processing method 300 can be suitable for use with a hypernetwork in association with Neural Radiance Fields (NeRF) related processing, in accordance with an embodiment of the disclosure.

The processing method 300 can, for example, include one or both of an input step 302 and a processing step 304, in accordance with an embodiment of the disclosure.

With regard to the input step 302, one or more input signals can be received, in accordance with an embodiment of the disclosure. For example, the input signal(s) can be received by the apparatus(es) 102.

With regard to the processing step 304, at least one processing task associated with NeRF-related processing can be performed (e.g., by the apparatus(es) 102) in connection with the input signal(s) in a manner so as to generate one or more output signals, in accordance with an embodiment of the disclosure.

In one embodiment, the processing task(s) can include any one of, or any combination of, the following:

- rendering processing to generate at least one rendered signal associable with a current viewpoint
- prerendering processing to generate at least one prerendered signal associable with a previous viewpoint with reference to the current viewpoint
- comparison based processing of the prerendered signal(s) and the previous iteration(s) of the output signal(s) to derive at least one parameter usable for adapting in association with the hypernetwork in a manner so as to facilitate consistency over time.

In this regard, it is appreciable that the processing task(s) can, for example, include rendering processing, prerendering processing and/or comparison-based processing (i.e., at least one of rendering processing, prerendering processing and comparison-based processing), in accordance with an embodiment of the disclosure.

In one embodiment, the rendering processing can, for example, be associated with inclusion of at least one time-based parameter in positional encoding to facilitate rendering of data from multiple timestamps so as to facilitate learning of motion information in association with derivation of the at least one parameter usable for adapting in association with the hypernetwork.

It is contemplated that in the above manner, the possibility of yielding more stable results during adaptation process can be facilitated, in accordance with an embodiment of the disclosure.

Moreover, in the above manner, the possibility of NeRF based rendering of online data to exhibit temporal consistency can be facilitated, in accordance with an embodiment of the disclosure.

It should be appreciated that the embodiments described above can be combined in any manner as appropriate (e.g., one or more embodiments as discussed in the "Detailed Description" section can be combined with one or more embodiments as described in the "Summary of the Invention" section).

It should be further appreciated by the person skilled in the art that variations and combinations of embodiments described above, not being alternatives or substitutes, may be combined to form yet further embodiments.

In one example, the communication network 106 can be omitted. Communication (i.e., between the apparatus(es) 102 and the device(s) 104) can be by manner of direct coupling. Such direct coupling can be by manner of one or both of wired coupling and wireless coupling.

In another example, the input signal(s) need not necessarily be communicated to the device(s) 104 from the apparatus(es) 102. For example, the input signal(s) can be communicated to the device(s) 104 directly from the sensor(s) for processing to generate/produce the representation signal(s). The representation signal(s) can be communicated from the device(s) 104 to the apparatus(es) 102. In this regard, it is appreciable that the apparatus(es) 102 need not necessarily be required to be configured for receiving and/or communication of the input signal(s), in accordance with an embodiment of the disclosure. In one embodiment, the apparatus(es) 102 can, for example, be configured to receive the representation signal(s) (i.e., input signal(s)) for processing without needing to, for example, receive and/or communicate the input signal(s) such as the sensor signal(s).

In yet another example, the present disclosure contemplates the possibility that the aforementioned input signal(s) can, for example, be communicated from/generated by any one of at least one apparatus 102, at least one device 104 and at least one user (e.g., using an apparatus 102), or any combination thereof, in accordance with an embodiment of the disclosure.

In yet another further example, the possibility of combining online NeRF (e.g., hypernetwork based online NeRF) with, for example, model agnostic meta-learning (MAML) was earlier discussed, in accordance with an embodiment of the disclosure. The present disclosure contemplates an example pseudocode which can possibly be illustrative in such a context as follows:

```
Pseudocode:

//Start of Pseudocode

struct Image:
    pixels: Array[H, W, 3]]
    pose: Isometry3
    time: Scalar

    struct VideoFrame:
     input_images: List[Image]
    alternate_viewpoint_image: Image
    camera_matrix: Matrix[3, 3]

    func nerf_render(
        features: Vector[feature_dim],
        pose: Isometry3,
        camera_matrix: Matrix[3, 3],
        time: Scalar
    ) -> Array[H, W, 3]:
```

```
// it can be appreciated that network details and/or details concerning MLP
(multilayer perceptron) architecture are generally known to a skilled artisan
// the dimension of the first layer can be increased to account for time

network = MLP(params = features)
for i_uv = "iterate all pixel coordinates":

        position = pose.position

        // Standard geometric calculation

        pixel_unit_vector = get_pixel_unit_vector(i_uv, pose, camera_matrix)

        pixel_rgb = [0.0, 0.0, 0.0]
        pixel_alpha = 1.0

        for i_step = 0..n_ray_trace_step:

            // step size may equal 0.1

             position += step_size * pixel_unit_vector

             rgb, alpha = network([position, pixel_unit_vector, time])

             pixel_rgb += pixel_alpha * rgb * (1.0 - alpha)
             pixel_alpha *= alpha

        rendered_image[i_uv] = pixel_rgb

return rendered_image

func execute_network(
        image_network: NeuralNetwork,
        fusion_network: NeuralNetwork,
        video_frame: VideoFrame
        desired_pose: Isometry3,
        prev_rendered_images: List[Image],
) -> Array[H, W, 3]:

[features, step_size_per_feature] = fusion_network([
        network.forward(input_image.pixels)
        for input_image in video_frame.input_images
])

for prev_rendered_image in prev_rendered_images:

        prev_image_rerendered = nerf_render(
            features,
             pose = prev_rendered_image.pose,
            time = (prev_rendered_image.time - video_frame.time)
        )

        discrepancy = mean_square_error(
            prev_rendered_image,
            prev_image_rerendered
        )

features-=step_size_per_feature*backprop_gradient[features](discrepancy)

return nerf_render(
        features,
        pose = desired_pose,
```

```
            time = 0.0
        )

        func train_network(videos: Sequence[Sequence[VideoFrame]]):

        // Note "ResNet50" includes the global pooling layers but not the final softmax
         layer.
        //
        // Standard initialization's like Xavier intialization are used.
        //
        // feature_dim may be 4096

         image_network = ResNet50(output_dim = feature_dim)

        fusion_network = LinearLayer(output_dim = 2 * feature_dim)

        // n_train_iter may be set to 10^6

        for i_train_iter = 0..n_train_iter:

                video = videos[random_int(0, n_video)]

                // n_adaptation_frame may be set to 10

                i_prev_frame = random_int(0, video.n_frame - n_adaptation_frame)

                i_current_frame = i_prev_frame + n_adaptation_frame

                rendered_image = execute_network(
                     image_network,
                    fusion_network,
                    video_frame = video[i_current_frame],
                desired_pose=video[i_current_frame].alternate_viewpoint_image.pose,
                    prev_rendered_images = [
                            video[i_frame].alternate_viewpoint_image
                            for i_frame = i_prev_frame..i_current_frame
                    ]
                )

                loss = mean_square_error(
                    rendered_image,
                    video[i_current_frame].alternate_viewpoint_image.pixels
                )
        // ADAM learning rate may be set to 10^-4, other ADAM paramters may be set
        to default values

                adam_optim([image_network, fusion_network], loss)

                //End of Pseudocode
```

In yet another additional further example, an alternate manner of updating (i.e., updating MLP parameters so that the MLP parameters can, for example, be more suitable for rendering an image that is consistent with previously rendered images) the MLP parameter(s) (i.e., with reference to the "features" per the earlier discussed Pseudocode above) based on updating a relatively small set of factors, rather than the whole MLP parameter vector as a whole is contemplated, in accordance with an embodiment of the disclosure. This can be illustrated in an example context of an example Pseudocode as follows:

```
 //Start

 func execute_network_with_factor_model(
     image_network: NeuralNetwork,
    fusion_network: NeuralNetwork,
```

```
            video_frame: VideoFrame
            desired_pose: Isometry3,
            prev_rendered_images: List[Image],
            ) -> Array[H, W, 3]:

            [features: Vector[feature_dim],
            adaptation_matrix: Matrix[feature_dim, factor_dim],
            step_size_per_factor: Vector[factor_dim]
            ] = fusion_network([
                    network.forward(input_image.pixels)
                    for input_image in video_frame.input_images
            ])

            adaptation_vector: Vector[factor_dim] = zeros()

            for prev_rendered_image in prev_rendered_images:

            prev_image_rerendered = nerf_render(
                        features + adaptation_matrix * adaptation_vector,
                         pose = prev_rendered_image.pose,
                        time = (prev_rendered_image.time - video_frame.time)
                          )

            discrepancy = mean_square_error(
                         prev_rendered_image,
                         prev_image_rerendered
                          )

            adaptation_vector-=
            step_size_per_factor*backprop_gradient[adaptation_vector](discrepancy)

            return nerf_render(
                    features,
                    pose = desired_pose,
                    time = 0.0
                     )
    //End
```

In yet another further additional example, an example architecture/structure associated with each of ResNet, Fusion layer and MLP as described above may be illustrated as below:

ResNet (table 1)

| Layer | Input Dimension | Output Dimension | Notes |
|---|---|---|---|
| Conv2D | $256 \times 256 \times 3$ | $128 \times 128 \times 64$ | kernel_size=7, stride=2, padding=3 |
| BatchNorm + ReLU | $128 \times 128 \times 64$ | $128 \times 128 \times 64$ | |
| MaxPool2D | $128 \times 128 \times 64$ | $54 \times 64 \times 64$ | kernel_size=3, stride=2, padding=1 |
| Resnet BlockGroup | $34 \times 64 \times 64$ | $34 \times 64 \times 256$ | For more details, please refer to, for example, Fig. 3 on page 4 of 'Deep Residual Learning for Image Recognition" by Kaiming He, Xiangyu Zhang, Shaoqing Ren and Jian Sun |
| Resnet BlockGroup | $34 \times 64 \times 256$ | $32 \times 32 \times 512$ | |
| Resnet BlockGroup | $32 \times 32 \times 512$ | $16 \times 16 \times 1024$ | |

(continued)

| Layer | Input Dimension | Output Dimension | Notes |
|---|---|---|---|
| Resnet BlockGroup | $16 \times 16 \times 1024$ | $8 \times 8 \times 2048$ | https://arxiv.org/pdf/1512.03385.pdf |
| BatchNorm + ReLU | $8 \times 8 \times 2048$ | $8 \times 8 \times 2048$ | |
| GlobalMean | $8 \times 8 \times 2048$ | 2048 | |

Fusion Layer (table 2)

| Layer | Input Dimension | Output Dimension | Notes |
|---|---|---|---|
| Concat | $2048 \times 4$ | 8192 | Assume 4 input images |
| Linear | 8192 | 38868 | |

MLP (table 3)

| Layer | Input Dimension | Output Dimension | Parameter Count |
|---|---|---|---|
| Linear | 7 | 256 | (7 + 1) * 256 = 2048 |
| LayerNorm | 256 | 256 | |
| ReLU | 256 | 256 | |
| Linear | 256 | 256 | (256 + 1) * 256 = 35792 |
| LayerNorm | 256 | 256 | |
| ReLU | 256 | 256 | |
| Linear | 256 | 4 | (256 + 1) * 4 = 1028 |
| Sigmoid | 4 | 4 | |
| Total parameters in MLP: 68868 | | | |

In yet another further additional example, in the earlier discussion(s), MLP has been generally mentioned, it is appreciable that other parametric functions designed for 3D rendering can possibly be applicable. An example can be PlenOctrees (i.e., an octree-based 3D representation which supports view-dependent effects). In this regard, it is appreciable that MLP and/or other parametric functions designed for 3D rendering like PlenOctrees can possibly be applicable.

In this regard, it is appreciable that a fusion layer as described above has the function of combining feature vectors from all input images into a common feature vector and may be applied in some of the above or below embodiments for more efficient data processing.

In the foregoing manner, various embodiments of the disclosure are described for addressing at least one of the foregoing disadvantages. Such embodiments are intended to be encompassed by the following claims, and are not to be limited to specific forms or arrangements of parts so described and it will be apparent to one skilled in the art in view of this disclosure that numerous changes and/or modification can be made, which are also intended to be encompassed by the following claims.

## Claims

1. An apparatus (102) suitable for use with a hypernetwork, the apparatus (102) comprising:

a first module (202) configurable to receive at least one input signal; and
a second module (204) coupled to the first module (202),
wherein the second module (204) configurable to process the at least one input signal by the first module (202) in a manner so as to generate at least one output signal, processing by the second module (204) comprising at least one of:

rendering processing to generate at least one rendered signal associable with a current viewpoint;
prerendering processing to generate at least one prerendered signal associable with a previous viewpoint with reference to the current viewpoint; and
comparison based processing of the at least one prerendered signal and at least one previous iteration of the output signal to derive at least one parameter usable for adapting in association with the hypernetwork.

2. The apparatus (102) as in claim 1, wherein the rendering processing is associable with inclusion of at least one time-based parameter in positional encoding to facilitate rendering of data from multiple timestamps so as to facilitate learning of motion information in association with derivation of the at least one parameter usable for adapting in association with the hypernetwork.

3. The apparatus (102) according to any of the preceding claims,
wherein the at least one input signal includes at least one of:

at least one sensor signal,
at least one representation signal,
at least one control signal and
at least one reference signal.

4. The apparatus (102) according to any of the preceding claims, the at least one sensor signal being generated by and communicated from at least one sensor coupled to the apparatus (102), the at least one sensor signal corresponding to a set of images.

5. The apparatus (102) according to any of the preceding claims, the at least one representation signal being generated in association with a Neural Network (NN) associable with the hypernetwork, the at least one representation signal being communicable from the NN to the apparatus (102),
wherein the at least one representation signal corresponding to at least one feature map representation.

6. The apparatus (102) according to any of the preceding claims, wherein the rendering processing and/or the prerendering processing are conducted by a NeRF implicit model and/or wherein the at least one input signal includes at least one input image capable of being converted to a feature map via a Neural Network (NN) associable with the hypernetwork to obtain at least one feature map representation and at least one representation signal corresponding to the at least one feature map representation capable of being communicated from the NN and received by the apparatus (102) for further processing to compute at least one parameter associable with the NeRF implicit model, wherein the at least one representation signal is preferably capable of being received by the second module for rendering processing, more preferably with rendering processing is associable with inclusion of at least one time-based parameter in positional encoding to facilitate rendering of data from multiple timestamps so as to facilitate learning of motion information in association with derivation of the at least one parameter usable for adapting in association with the hypernetwork.

7. The apparatus (102) according to any of the preceding claims, the at least one control signal being generatable based on user input in association with requesting at least one viewpoint including at least one of a previous viewpoint and a current viewpoint.

8. The apparatus (102) according to any of the preceding claims, the at least one reference signal being associable with at least one of at least one output signal associated with a previous time step and at least one viewpoint request associated with a previous time step.

9. The apparatus (102) according to any of the preceding claims,

wherein the rendering processing and/or the prerendering processing are conducted
by an online NeRF in combination with model agnostic meta-learning ("online NeRF meta-learning")

and/or
wherein the step of comparison based processing is

comparison based processing of the at least one prerendered signal and at least one previous iteration of the output signal to derive the at least one parameter,
and
utilizing the derived at least one parameter, in association with online NeRF meta-learning, for adapting in association with the hypernetwork.

10. The apparatus (102) according to any of the preceding claims, wherein the online NeRF utilizes one or more multilayer perceptrons (MLP) to evaluate one or more scene functions to create at least one feature map representation.

11. A processing method (300) for use with a hypernetwork, the processing method (300) comprising:

an input step (302) wherein at least one input signal is receivable by an apparatus (102) of any of the preceding claims;
a processing step (304) wherein at least one processing task associated with NeRF-related processing is performed, by an apparatus (102) of any of the preceding claims, in connection with the at least one input signal to generate at least one output signal, the at least one processing task comprising at least one of:

rendering processing to generate at least one rendered signal associable with a current viewpoint;
prerendering processing to generate at least one prerendered signal associable with a previous viewpoint with reference to the current viewpoint; and
comparison based processing of the at least one prerendered signal and at least one previous iteration of the output signal to derive at least one parameter usable for adapting in association with the hypernetwork.

12. The processing method (300) as in claim 11, wherein the rendering processing is associable with inclusion of at least one time-based parameter in positional encoding to facilitate rendering of data from multiple timestamps so as to facilitate learning of motion information in association with derivation of the at least one parameter usable for adapting in association with the hypernetwork.

13. A computer program comprising instructions which, when the program is executed by a computer, cause the computer to carry out at least one of the input step (302) and the processing step (304) according to the processing method (300) of claim 11 or claim 12.

14. A computer readable storage medium having data stored therein representing software executable by a computer, the software including instructions, when executed by the computer, to carry out at least one of the input step (302) and the processing step (304) according to the processing method (300) of claim 11 or claim 12.

100

104

102

106

102

104

Fig.1a

150

152

154

156

164

159

159

158a

158c

158b

160

162

166

151

Fig.1b

158a/158b

172

+

174

176

X

178

Fig.1c

102

200

200a

200b

202 ⟷ 204 ⟷ 206

Fig.2

300

302

304 ⟶ 304a

304 ⟶ 304b

306

Fig.3

## EUROPEAN SEARCH REPORT

Application Number

EP 22 18 8656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO CHEN ET AL: "Dynamic View Synthesis from Dynamic Monocular Video", 2021 IEEE/CVF INTERNATIONAL CONFERENCE ON COMPUTER VISION (ICCV), IEEE, 10 October 2021 (2021-10-10), pages 5692-5701, XP034092305, DOI: 10.1109/ICCV48922.2021.00566 [retrieved on 2022-02-10] * figures 1,2,4 * * abstract * * section 1 "introduction" – paragraph 3, sentences 1 to 3 * * section 3.1 "overview" – paragraph 1 * * section 3.1 "overview" – last paragraph, lines 1 to 12, page 5695, left-hand column * * section 3.1 "overview" * * section 3.3 "dynamic nerf" * * section 3.4 "regularization losses for dynamic nerf" – sub-section "3d temporal consistency loss" * * section 3.5 "combined model" * ----- | 1-14 | INV. G06T15/20 G06T15/50 |
| X | YU SHIXING ET AL: "Meta-Interpolation: Time-Arbitrary Frame Interpolation via Dual Meta-Learning", 2022 IEEE INTERNATIONAL SYMPOSIUM ON CIRCUITS AND SYSTEMS (ISCAS), IEEE, 27 May 2022 (2022-05-27), pages 3120-3124, XP034224645, DOI: 10.1109/ISCAS48785.2022.9937799 [retrieved on 2022-11-11] * figure 1 * * section I "introduction", paragraphs 1 and 5 * * section II "meta-interpolation" * ----- -/-- | 1-14 | TECHNICAL FIELDS SEARCHED (IPC) G06T |

The present search report has been drawn up for all claims

| Place of search | Date of completion of the search | Examiner |
|---|---|---|
| Berlin | 11 January 2023 | Gauthier, J |

Europäisches
Patentamt

European
Patent Office

Office européen
des brevets

## EUROPEAN SEARCH REPORT

Application Number

EP 22 18 8656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEI-ZE CHIANG ET AL: "Stylizing 3D Scene via Implicit Representation and HyperNetwork", ARXIV.ORG, CORNELL UNIVERSITY LIBRARY, 201 OLIN LIBRARY CORNELL UNIVERSITY ITHACA, NY 14853, 5 June 2021 (2021-06-05), XP081983247, * figures 1,3,4 * * section 3 "proposed method" * * section 3.2 "stylization on NeRF-based scene representation", sub-section "hypernetwork" * * section 3.3 "model training" * | 1-14 | |
| A | LIAO WANG ET AL: "iButter: Neural Interactive Bullet Time Generator for Human Free-viewpoint Rendering", ARXIV.ORG, CORNELL UNIVERSITY LIBRARY, 201 OLIN LIBRARY CORNELL UNIVERSITY ITHACA, NY 14853, 12 August 2021 (2021-08-12), XP091030899, * figures 1,2,4 * * section 1 "introduction", last paragraph * * section 4.1 "network" * * section 4.2 "Real-time Previews and Trajectory Selection" * * section 4.3 "high-quality bullet-time rendering", last paragraph * | 1-14 | TECHNICAL FIELDS SEARCHED (IPC) |

-/--

The present search report has been drawn up for all claims

| Place of search | Date of completion of the search | Examiner |
|---|---|---|
| Berlin | 11 January 2023 | Gauthier, J |

EPO FORM 1503 03.82 (P04C01)

page 2 of 3

**EUROPEAN SEARCH REPORT**

Application Number

EP 22 18 8656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Finn Chelsea ET AL: "Model-Agnostic Meta-Learning for Fast Adaptation of Deep Networks", , 18 July 2017 (2017-07-18), pages 1-13, XP055912177, Retrieved from the Internet: URL:https://arxiv.org/pdf/1703.03400.pdf [retrieved on 2022-04-12] * the whole document * | 1-14 | |
| A | WANG LIAO ET AL: "Fourier PlenOctrees for Dynamic Radiance Field Rendering in Real-time", 2022 IEEE/CVF CONFERENCE ON COMPUTER VISION AND PATTERN RECOGNITION (CVPR), IEEE, 18 June 2022 (2022-06-18), pages 13514-13524, XP034195209, DOI: 10.1109/CVPR52688.2022.01316 [retrieved on 2022-09-27] * the whole document * | 1-14 | |

**TECHNICAL FIELDS SEARCHED (IPC)**

The present search report has been drawn up for all claims

| Place of search | Date of completion of the search | Examiner |
|---|---|---|
| Berlin | 11 January 2023 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)